# EUROPEAN PATENT APPLICATION

(11) **EP 1 710 742 A1**
(43) Date of publication of application: **11.10.2006**
(21) Application number: 06111979.8
(22) Date of filing: 30.03.2006
(51) Int. Cl.: G06Q 10/00

(54) **System and methods for electronically notarizing scanned documents**

(30) Priority: 31.03.2005 US 666732 P; 02.05.2005 US 119540
(71) Applicant: Xerox Corporation, Rochester, New York 14644 (US)
(72) Inventor: Mayer, James L., Rochester, NY 14618 (US)
(74) Representative: Grünecker, Kinkeldey, Stockmair & Schwanhäusser Anwaltssozietät

(57) **Abstract**

Systems and methods of electronically notarizing scanned documents may include an image capturing device that captures data from an original document provided by a user to obtain an electronic image of the original document that forms an electronic document. Systems and methods may also include a user identity verification device that obtains and verifies identity information of the user that provided the original document. Systems and methods may also include an electronic signing device that signs the electronic document with an electronic signature of the user and an electronic signature of the image forming apparatus. Further, systems and methods may also include a transmitting device that transmits the signed electronic document to at least one of a server, a repository and an electronic notary.

## Description

### BACKGROUND

This invention relates to the field of electronic notaries.

Public notaries and electronic notaries have been widely used by individuals and organizations to certify that a certain individual provided a specified document, to either the public notary or the electronic notary, at a specified time. However, the desirability of obtaining certifications via electronic notaries has been steadily increasing in an effort to reduce an amount time necessary to physically travel to the notary public. Although obtaining certifications from electronic notaries is less time consuming as compared to many public notaries, electronic documents sent to the electronic notaries are infinitely malleable because such electronic documents may be easily modified in undetectable ways. As a result, the certification of an electronic document may be compromised and questioned as not being trustworthy, unless the electronic document is protected from unsolicited alterations and can be verified.

To protect the electronic documents from unsolicited alterations, conventional electronic signatures have been added to scanned documents via encryption. Encryption is a way that an individual may secure an electronic document with an electronic signature so that only an intended recipient can read the electronic document and verify that the sent electronic document was not subsequently altered. The electronic signature may include a digital certificate as a form of credentials used in conjunction with encryption to verify that an individual sending information electronically is being truthful about his/her identity.

### SUMMARY

Although encryption is useful to certify that an electronic document sent over the Internet, e.g., by e-mail, has not been altered with and to verify the identity of the sender, the encryption process that protects the contents of the electronic document does not begin until a certain period of time has lapsed after the actual physical document is scanned in conventional image forming systems. For example, a user may feed a physical document into a conventional image forming apparatus, such as a multifunctional device. The multifunctional device may subsequently scan the physical document to create a digital image of the physical document. The digital image of the physical document may then be stored in a memory of the multifunctional device for subsequent retrieval. Finally, the multifunctional device may include a network connection that is used to send the electronic document over a network to other devices such as an electronic notary.

Although such an approach is well known, there is often a gap between when a physical document is placed into an input feeder of an image forming apparatus by a user and when the document becomes certified in a form acceptable to a final user of the system. For example, if the document is not signed at the image forming apparatus, then there is a period of time between scanning the physical document and signing the electronic document in which the document could be further modified. Even if the image forming apparatus immediately digitally signs the electronic document when the physical document is scanned, the final user of the document may have difficulty establishing a chain of trust because the potentially large number of image forming devices can be difficult to manage effectively. Therefore, it is desirable to certify that the electronic document is an accurate electronic version of the physical document that was placed into the input feeder of the image forming apparatus, to verify an identity of the user who scanned the original document, and to electronically notarize the electronic document.

Exemplary embodiments may scan an original document, sign the scanned document with an electronic signature of the image forming apparatus and an electronic signature of the user prior to the transmission of the twice signed document to an electronic notary. In such exemplary embodiments, the image forming apparatus provides the signature of both the user and the image forming apparatus itself, the electronic signatures certify to the electronic notary that the transmitted electronic document is an accurate, e.g., secure, non-altered, electronic version of the original document that was scanned into the image forming apparatus.

By providing electronic signatures at or closer to the point of the scanning, the receiving party of the scanned document may be assured that the scanned document is a true representation of the original document that the person initiating the scan meant to transmit to the receiving party. As a result, a chain of trust may be established and communicated between the electronic notary and the image forming apparatus.

Exemplary embodiments of a method of electronically notarizing scanned documents may include obtaining an original document from a user, initializing image capture of the original document, obtaining and validating identity information of the user associated with the original document and the initialization of the original document, capturing the original document in an image forming apparatus to obtain electronic images of the original document, the electronic image forming an electronic document, signing the electronic document with an electronic signature of the user and an electronic signature of the image forming apparatus, and transmitting the signed document to an electronic notary without further modification.
In a further embodiment of the method specified above the method further comprises transmitting the signed document to a server.
In a further the method further comprises transmitting the transmitted signed document from the server to an electronic notary.
In a further embodiment the method further comprises transmitting the signed document to a repository.
In a further embodiment the method further comprises transmitting the transmitted signed document from the repository to an electronic notary.

Exemplary embodiments may include signing the electronic document using an electronic signature derived from at least one of a digital certificate of the user, a digital certificate of the image forming apparatus, a name and password associated with the user, and a name and password associated with the image forming apparatus.

Exemplary embodiments may include automatically transmitting the signed document to the electronic notary.

Exemplary embodiments may further include electronically notarizing the transmitted signed document.

Exemplary embodiments may include electronically notarizing the transmitted signed document by signing the transmitted document using an electronic signature of the electronic notary derived from at least one of a digital certificate of the electronic notary and a name and password associated with the electronic notary.

Exemplary embodiments may further include transmitting the signed document to a server or a repository.

Exemplary embodiments may include transmitting the transmitted signed document from the server to the electronic notary.

Exemplary embodiments may further include transmitting the signed document to a repository.

Exemplary embodiments may include transmitting the transmitted signed document from the repository to the electronic notary.

Exemplary embodiments of a system for electronically notarizing scanned documents may include an image capturing device that captures data from an original document provided by a user to obtain an electronic image of the original document in which the electronic image may include an electronic document, a user identity verification device that obtains and verifies identity information of the user that produced the original document, an electronic signing device that signs the electronic document with an electronic signature of the user and an electronic signature of the image capturing device, a transmitting device that transmits the signed document, and an electronic notary that receives the transmitted document, wherein the signed document is transmitted to the electronic notary without further modification.
In one embodiment of the system of claim 7, the electronic signing device signs the electronic document using at least one of a digital signature of the user, a digital signature of the image forming apparatus, a digital certificate of the user, and a digital certificate of the image capturing device.
In a further embodiment the system further comprises a transmitting device that transmits the signed document.
In a further embodiment the system further comprises an electronic notary that receives and notarizes the transmitted signed document.
In a further embodiment the electronic notary notarizes the transmitted signed document by signing the transmitted signed document using at least one of an electronic signature of the electronic notary and a digital certificate of the electronic notary.
In a further embodiment the system further comprises at least one of a repository and a server that receives the transmitted signed document and subsequently transmits the transmitted signed document.
In a further embodiment the system further comprises an electronic notary that receives and signs the subsequently transmitted document with an electronic signature of the electronic notary.
In a further embodiment the electronic notary signs the subsequently transmitted document using at least one of a digital signature of the electronic notary and a digital certificate of the electronic notary.

Exemplary embodiments may include the electronic signing device signs the electronic document using an electronic signature of the electronic notary derived from at least one of a digital certificate of the user, a digital certificate of the image capturing device, a name and password associated with the user, and a name and password associated with the image forming apparatus.

Exemplary embodiments may include the transmitting device automatically transmitting the signed document.

Exemplary embodiments may include an electronic notary that receives and notarizes the transmitted signed document.

Exemplary embodiments may include the electronic notary notarizes the transmitted signed document by signing the transmitted signed document using an electronic signature at least one of a digital certificate of the electronic notary and a name and password associated with the electronic notary.

Exemplary embodiments may further include at least one of a repository and a server that receives the transmitted signed document and subsequently transmits the transmitted signed document.

Exemplary embodiments may include the electronic notary receiving and signing the subsequently transmitted document with the electronic signature of the electronic notary.

Exemplary embodiments may include the electronic notary signs the subsequently transmitted document using at least one of a digital signature of the electronic notary and a digital certificate of the electronic notary.

Exemplary embodiments of a system for electronically notarizing scanned documents may include an image capturing device that captures data from an original document provided by a user to obtain an electronic imageof the original document in which the electronic image may include an electronic document, a user identity verification device that obtains and verifies identity information of the user that provided the original document, and an electronic signing device that signs the electronic document with an electronic signature of the user and an electronic signature of the image capturing device, wherein the electronic signing device includes at least one of a repository and a server.

A xerographic device may include a system for electronically notarizing scanned documents.

These and other features are described in or are apparent from the following detailed description.

### BRIEF DESCRIPTION OF THE DRAWINGS

Various exemplary details are described herein, with reference to the following figures, wherein:

Fig. 1 is a flowchart outlining an exemplary method of electronically notarizing scanned documents;

Fig. 2 is a flowchart outlining in greater detail an exemplary method of obtaining user identity information associated with the original document;

Fig. 3 is a flowchart outlining in greater detail an exemplary method of scanning the original document;

Fig. 4 is a flowchart outlining in greater detail an exemplary method of signing the scanned document;

Fig. 5 is a flowchart outlining in greater detail an exemplary method of signing the scanned document with an electronic signature of the image forming apparatus;

Fig. 6 is a flowchart outlining in greater detail an exemplary method of signing the previously signed document with an electronic signature of the user;

Fig. 7 is a flowchart outlining in greater detail an exemplary method of notarizing the signed scanned document; and

Fig. 8 is a block diagram outlining an exemplary system for notarizing scanned documents.

### DETAILED DESCRIPTION OF EXEMPLARY EMBODIMENTS

The following detailed description is directed to a modular work surface of a specific type of image forming apparatus, namely, a multifunctional device including a scanner and a printer. However, it should be appreciated that the description is for ease of understanding and familiarity only, and does not exclude other types of image forming apparatus, whether known or later developed.

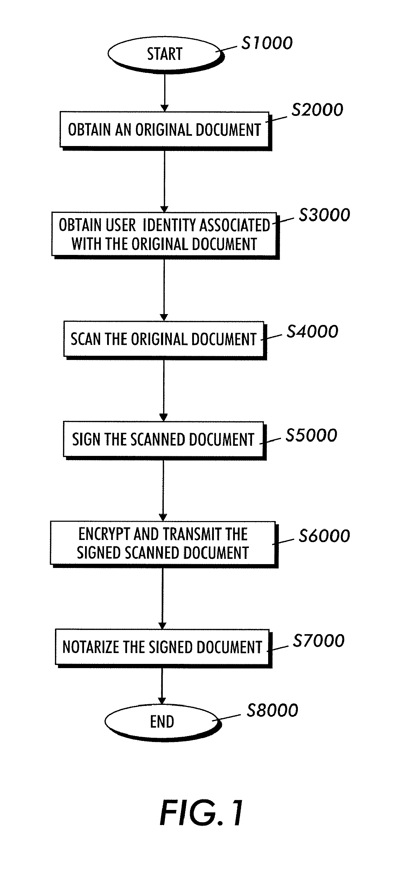

Fig. 1 is a flowchart outlining an exemplary method of electronically notarizing scanned documents. As shown in Fig. 1, operation of the method begins in step S1000 and continues to step S2000, where an original document may be obtained. The original document may be any type of visually recognizable document, e.g., a hard copy, a paper copy, and the like, provided by a user and obtained from any known or hereafter developed original document source, such as from a book, magazine, photo album, paper document, and the like. Although the original document may not be an authentic document, e.g., a copy of the authentic document, the original document may be any visually recognizable document that is unique to a particular scanning process at a particular time.

The identity of a user that provided the original document obtained in step S2000 may be obtained in step S3000. The user may be, for example, the person who initiated the scan of the original document. Next, in step S4000, the original document may be scanned. Then, in step S5000, the scanned document may be signed. Next, the signed scanned document may be encrypted and transmitted in step S6000. Then, in step S7000, the signed document may be notarized. Operation of the method then continues to step S8000, where the method ends.

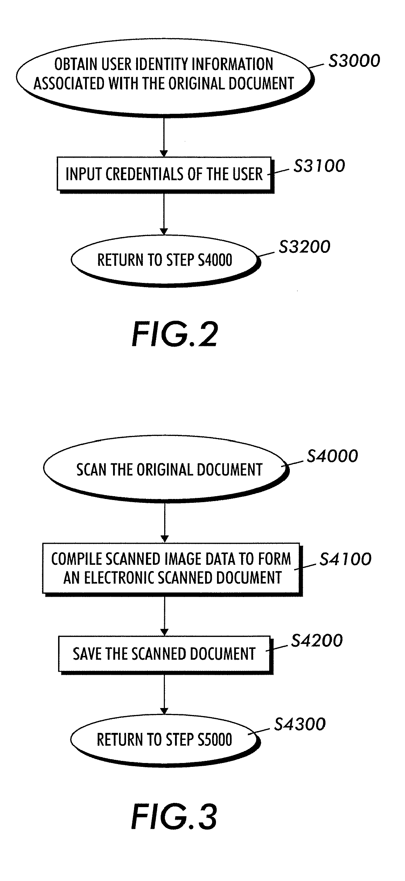

Fig. 2 is a flowchart outlining in greater detail an exemplary method of obtaining user identity information associated with the original document. As shown in Fig. 2, operation of the method continues from step S3000 to step S3100, where the credentials of the user may be input into an image forming device that may include at least a scanner and a network connection, as discussed above. The credentials of the user may be input by the user or any person acting at a request of the user.

By obtaining the user's credentials, the image forming apparatus may validate the user's identity. It should be appreciated that the credentials of the user may be any type of information identifying the user, such as a name, password, various forms of security keys, and/or the like, that may be input into and verified by the image forming device. It should also be appreciated that the credentials may be input by any known or hereafter developed method or device capable of providing user information using, for example, a keyboard, special identification card or other device. Operation then continues to step S3300, where operation returns to step S4000.

Fig. 3 is a flowchart outlining in greater detail an exemplary method of scanning the original document. As shown in Fig. 3, operation of the method continues from step S4000 to step S4100, where data from the original document may be obtained as scanned electronic image data that may subsequently be compiled to form an electronic scanned document. Then, in step S4200, the scanned electronic document may be saved for subsequent processing. Operation then continues to step S4300, where operation returns to step S5000.

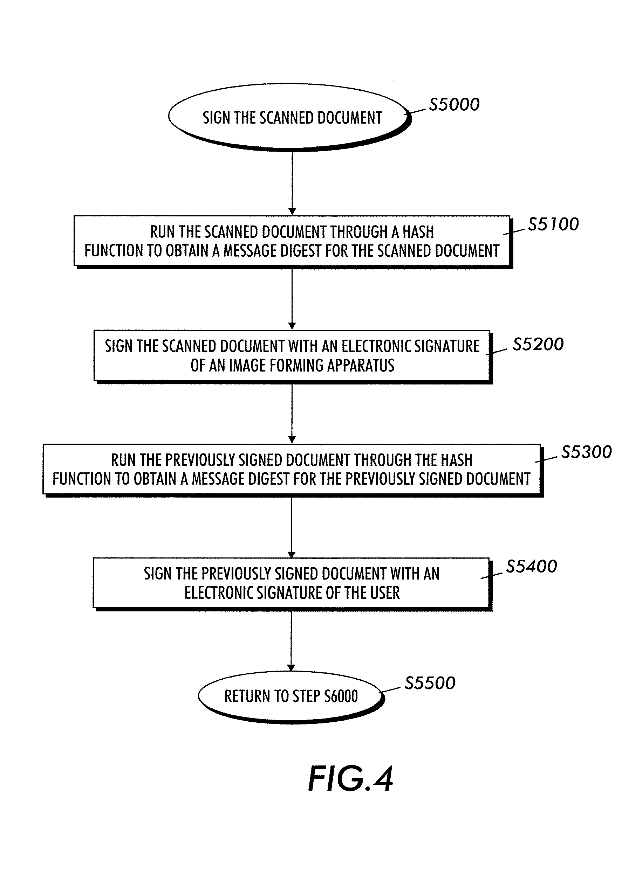

Fig. 4 is a flowchart outlining in greater detail an exemplary method of signing the scanned document. As shown in Fig. 4, operation of the method continues from step S5000 to step S5100, where the scanned document may be run through a hash function in order to obtain a message digest for the scanned document, i.e., a check summary may be calculated based on digital information of the scanned document in accordance with an algorithm. Then, in step S5200, the scanned electronic document may be signed with an electronic signature of the image forming apparatus.

Next, in step S5300, the previously signed document may be run through the hash function in order to obtain a message digest for the previously signed document, i.e., a check sum may be calculated based on digital information of the previously signed document in accordance with an algorithm. Then, in step S5400, the previously signed document may be signed with an electronic signature of the user. Operation then continues to step S5500, where operation returns to step S6000.

It should be appreciated that Fig. 4 is particularly directed to electronically signing of the scanned document, e.g., signing using digital signatures. However, it should be appreciated that the description is for ease of understanding and familiarity only, and does not exclude other the types of encryption technologies used to protect documents from later alterations and to verify the identity of the user. For example, digital certificates issued by certified authorities may be used to verify the identity of the image forming apparatus and/or user.

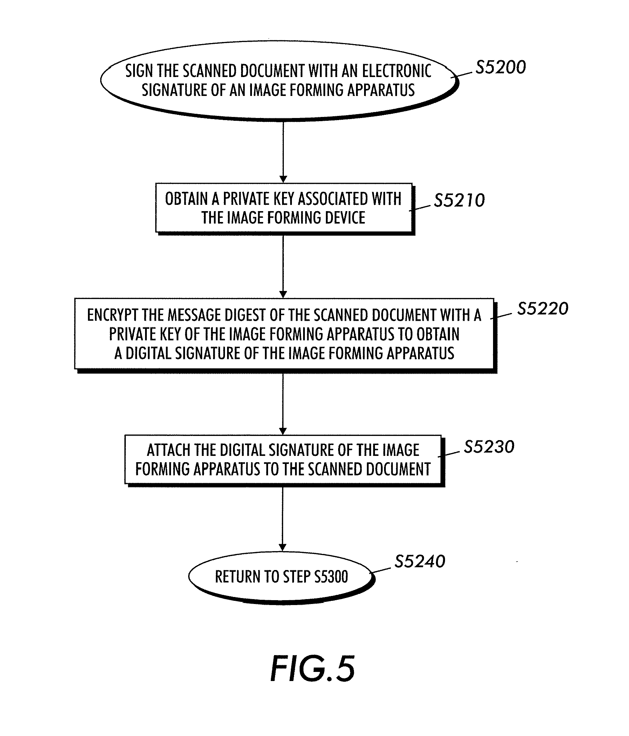

Fig. 5 is a flowchart outlining in greater detail an exemplary method of signing the scanned document with an electronic signature of the image forming apparatus. By signing the scanned document, the image forming apparatus may certify that the scanned document has not been changed, and the scanned document is an accurate electronic version of the original document that the image forming apparatus was given to scan. As shown in Fig. 5, operation of the method continues from step S5200 to step S5210, where a private key associated with the image forming apparatus may be obtained. Then, in step S5220, the message digest of the scanned document may be encrypted with the private key of the image forming apparatus to obtain a digital signature of the image forming apparatus. Next, in step S5230, the digital signature of the image forming apparatus may be attached to the scanned document. Operation then continues to step S5240, where operation returns to step S5300.

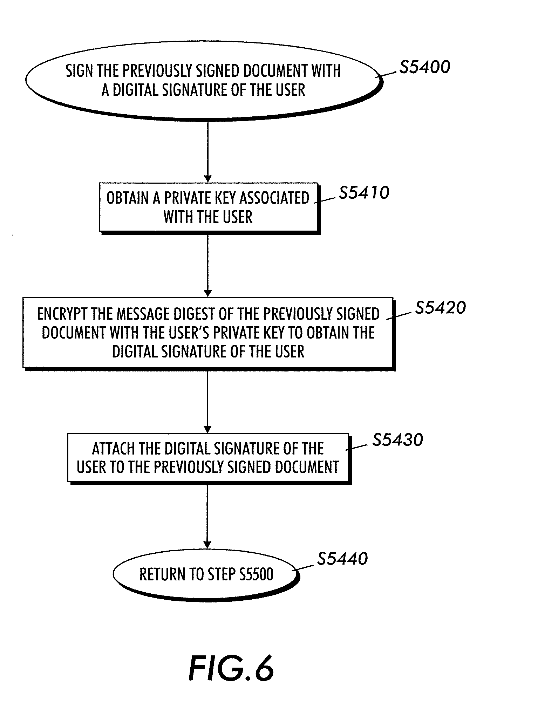

Fig. 6 is a flowchart outlining in greater detail an exemplary method of signing the previously signed document with an electronic signature of the user. As shown in Fig. 6, operation of the method continues from step S5400 to step S5410, where a private key of the user may be obtained. Then, in step S5420, the message digest of the previously signed document may be encrypted with the private key of the user to obtain a digital signature of the user. Next, in step S5430, the digital signature of the user may be attached to the previously signed document. Operation then continues to step S5440, where operation returns to step S5500.

At this point the electronic document may have two electronic signatures using the credentials of the user and the credentials of the image forming apparatus. The credentials of the image forming apparatus may be provided by the manufacturer or as part of some other process. These credentials certify that the electronic scanned version of the original document has not been altered with and the user is the person who initiated the scan. Therefore, a secure mechanism may be established in which the signed scanned document may be sent from the image forming apparatus to the electronic notary to reduce forgery or alteration of the electronic document.

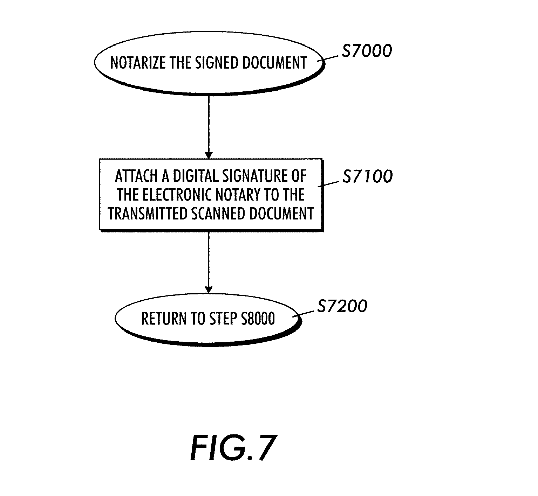

Fig. 7 is a flowchart outlining in greater detail an exemplary method of notarizing the signed scanned document. As shown in Fig. 7, operation of the method continues from step S7000 to step S7100, where an electronic signature, e.g., using a digital signature or a digital certificate, of the electronic notary may be attached to the transmitted scanned document. Operation then continues to step S7200, where operation returns to step S8000.

In exemplary embodiments of the methods and systems for notarizing scanned documents, it should be appreciated that image forming apparatus may transmit the signed scanned document to the user via e-mail or to a repository prior to notarization. As long as the image forming apparatus validates the user's identity and the repository trusts the image forming apparatus, the signed scanned document may be subsequently sent from the user's e-mail to the electronic notary or fetched from the repository by the electronic notary with the assurance that the signed scanned document is an accurate electronic version of the original document.

In exemplary embodiments of the methods and systems for notarizing scanned documents, it should be appreciated that the scanner may transmit a scanned document directly to the server prior to notarization so that the server may electronically sign the scanned document. If the scanner authenticates itself to the server, the document signed by the server may be subsequently sent from the server to the electronic notary with the assurance that the signed document is an accurate electronic version of the original document.

In exemplary embodiments of the methods and systems for notarizing scanned documents, it should be appreciated that submitting the entire signed document to the electronic notary may be unnecessary. For example, it may be sufficient to send only the digital signature or a document identifier that may be included in the digital signature.

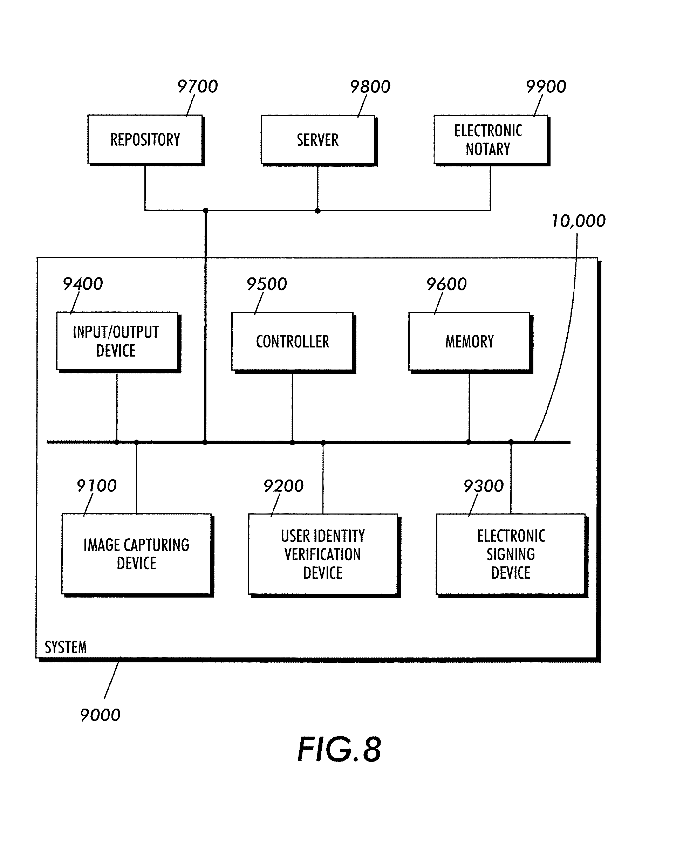

Fig. 8 is a block diagram outlining an exemplary system for notarizing scanned documents of original documents provided by a user. The original document may be a book, magazine, photo album, paper document, or the like, capable of producing a tangible medium. As shown in Fig. 8, the system 9000 may include an image capturing device 9100, a user identity verification device 9200, an electronic signing device 9300, a controller 9500 and a memory 9600, each appropriately connected by one or more control and/or data buses 10000. The system 9000 may also include an input/output device 9400, a repository 9700, a server 9800 and an electronic notary 9900, each appropriately connected by the one or more control and/or data buses 10000.

The image capturing device 9100 may be a device such as a scanner, multifunctional device, or any other known or hereafter developed device capable of receiving input information and capturing an image of the original document.

The user identity verification device 9200 may be a device such as a computer system, a processor or other device capable of obtaining and verifying identity information of a user information associated with the original document received by the image capturing device 9100.

The electronic signing device 9300 may be a device such as a computer system, a processor or other device capable of signing the captured electronic document with an electronic signature of the user and the image capturing device 9100.

The memory 9600 may be implemented using any appropriate combination of alterable, volatile or non-volatile memory or non-alterable, or fixed, memory. The alterable memory, whether volatile or non-volatile, can be implemented by using any one or more of static or dynamic RAM, a floppy disk and disk drive, a writeable or rewriteable optical disk and disk drive, a hard drive, flash memory or the like. Similarly, the non-alterable or fixed memory can be implemented using any one or more of ROM, PROM, EPROM, EEPROM, and gaps in optical ROM disk, such as a CD ROM or DVD ROM disk and disk drive, or the like.

The exemplary system for notarizing scanned documents according to Fig. 8 may operate in the following manner under the control of the controller 9500 and may store captured, received or transmitted information in the memory 9600 by using any known or later developed device or method. A user of the system may provide an original document to the image capturing device 9100. The image capturing device 9100 may receive data from the original document to obtain an electronic image including an electronic document. The user identity verification device 9200 receives and verifies identity information of the user that provided the original document to the image capturing device 9100, e.g., the user or any person acting on behalf of the user may place the original document in the scanner and initialize a scan.

Next, the electronic signing device 9300 may then sign the electronic document obtained by the image capturing device 9100 based on the verified user identity information. The electronic signing device 9300 may sign the electronic documents with an electronic signature of the user and an electronic signature of the image capturing device 9100. Then, the electronic signing device 9300 may send the signed electronic document through the bus 10000 to a repository 9700, a server 9800 and/or an electronic notary 9800 via an input/output device 9400 that transmits that signed electronic document.

Alternatively, the electronic signing device may include the input/output device 9400 and at least one of the repository 9700 or the server 9800 to verify an identity of the image capturing device 9100, sign the electronic document with the electronic signature of the image capturing device 9100.

At this point, the system has the credentials of the user and the credentials of the image forming apparatus to establish a secure mechanism by which the signed scanned document may be sent from the image capturing device, image forming apparatus, xerographic system and/or xerographic device to the electronic notary 9900 to reduce forgery or alteration of the electronic document. Subsequently, the signed scanned document may be transmitted to the electronic notary 9900 that notarizes the previously signed electronic document by adding an electronic signature of the notary.

## Claims

1. A method of electronically notarizing scanned documents, comprising:
obtaining an original document from a user;
initializing image capture of the original document based on input by the user;
obtaining and validating identity information of the user associated with the original document and the initialization of the original document;
capturing the original document in an image forming apparatus to obtain electronic images of the original document, the electronic image forming an electronic document; and
signing the electronic document with an electronic signature of the user and an electronic signature of the image forming apparatus.

2. The method of claim 1, wherein signing the electronic document further comprises signing the electronic document using at least one of a digital signature of the user, a digital signature of the image forming apparatus, a digital certificate of the user, and a digital certificate of the image forming apparatus.

3. The method of claim 1, further comprising transmitting the signed document to an electronic notary.

4. The method of claim 3, wherein said signed document is transmitted without any further modification.

5. The method of claim 3, further comprising electronically notarizing the transmitted signed document.

6. The method of claim 5, wherein electronically notarizing the transmitted signed document comprises signing the transmitted document using at least one of an electronic signature of the electronic notary and a digital certificate of the electronic notary.

7. A system for electronically notarizing scanned documents, comprising:
an image capturing device that captures data from an original document provided by a user to obtain an electronic image of the original document the electronic image comprising an electronic document;
a user identity verification device that obtains and verifies identity information of the user that provided the original document; and
an electronic signing device that signs the electronic document with an electronic signature of the user and an electronic signature of the image capturing device.

8. A xerographic device comprising the system of claim 7.

9. A system for electronically notarizing scanned documents, comprising:
an image capturing device that captures data form an original document provided by a user to obtain an electronic image of the original document the electronic image comprising an electronic document;
a user identity verification device that obtains and verifies identity information of the user that provided the original document; and
an electronic signing device that signs the electronic document with an electronic signature of the user and an electronic signature of the image capturing device, wherein the electronic signing device includes at least one of a repository and a server.

10. A xerographic system comprising a xerographic device and the system of claim 9.
